# EUROPEAN PATENT SPECIFICATION

(11) **EP 3 239 540 B1**
(45) Date of publication and mention of the grant of the patent: **19.12.2018**
(21) Application number: 17164884.3
(22) Date of filing: 05.04.2017
(51) Int. Cl.: F16B 21/18

(54) **A FIXATION ARRANGEMENT OF A JOINT PIN AND A PIN CLAMP**
EINE BEFESTIGUNGSANORDNUNG EINES GELENKZAPFENS UND EINER STIFTKLEMME
DISPOSITIF DE FIXATION D'UNE BROCHE D'ARTICULATION ET D'UNE PINCE BROCHE

(30) Priority: 29.04.2016 EE U201600017 U
(43) Date of publication of application: 01.11.2017
(73) Proprietor: OÜ Palmse Mehaanikakoda, 45202 Lääne-Viru maakond (EE)
(72) Inventor: Puusepp, Anti, 45601 (EE)
(74) Representative: Toome, Jürgen

(56) References cited:
- WO-A1-87/00592
- US-B2- 8 528 870

## Description

### TECHNICAL FIELD

The present invention relates to a fixation arrangement between a joint pin and a pin clamp immovably fixed into the equipment by means of the pin clamp. The fixation arrangement of the pin of such type has found application in most fields of mechanical engineering. The main fields of applications where this type of arrangement is in use include forest technology, hinged joints of lifting machines, log grips (including brush cutting guillotines and other equipment necessary for gripping materials), timber transporting trailers (e.g., fixing of spider beams, towbar and towbar cylinders), hinged joints of agricultural equipment (cultivators, ploughs, seeding machinery, etc.), construction equipment such as buckets, mouldboards, excavators, etc.

### BACKGROUND ART

The purpose of the present solution is to link the pin (that is also called axle or gudgeon) connecting different hinged joints with a clamp (hereinafter referred to as "pin clamp") that would prevent the rotation of the pin in relation to a single part in the hinged joint or to an assembly of parts (equipment), and at the same time would allow the tightening of a nut on the other head of the pin, without the pin rotating. The pin clamp also prevents the movement of the pin along the longitudinal axis of the pin. The options of linking the pin and the clamp with each other can be classified into two fundamentally different solutions:
1) the pin will be linked to the pin clamp using a method (mostly with welded joint) that does not allow subsequent disassembly;
2) the pin will be linked to the pin clamp using a method (locking rings, studs, bolted joints, expander, etc.) that allows subsequent disassembly.

Most similar to the present invention is a product used by the Swedish company Cranab AB, and the products marketed under the trade mark Cranab. For example, in the document under the following web link: http://www.loglink.eu/html/images/cran_fc_2015-eng.pdf.

In the solution used by them, a cylindrical recess is made on the head of the pin, in the cylindrical inner surface of which is a groove for a locking ring. At least one notch has been made on the head of the pin that passes through this cylindrical recess and forms two pin teeth on the head of the pin. There is a corresponding number of sockets in the pin clamp, the number of which corresponds to the number of these pin teeth. If the pin clamp has been placed on the head of the pin to allow the engagement of the sockets with the pin teeth, the pin clamp will be fixed to the head of the pin with a locking ring. The locking ring is located in a cylindrical recess on the head of the pin, but the notches forming the pin teeth enable to press the locking ring out of the groove from the outside.

For this reason, the Cranab's solution has the following disadvantages:
1) getting loose of the locking ring is not excluded, whereby:
   a) the locking ring may be defective or incorrectly installed, and it may not necessarily become obvious during the assembly;
   b) theoretically, it is possible that a branch or any other external factor will cause the locking ring to come out;
2) the locking ring operates in a very narrow area for the load (cutting and bending forces have an effect), and in the case of high dynamic loads, this may significantly reduce the service life of the locking ring (fatigue cracks until breaking);
3) the nature of the assembly requires great correctness and a human error/careless assembly may cause an emergency situation (it should be taken into consideration that in some applications the working place of a man is on the lifting machine, and the reliability of the pin arrangement is thus directly related to safety).
   If the locking ring is not correctly put into its groove, then it may not become immediately obvious and may also not be prima facie noticeable.
4) in the case of the given pin clamp which is closed in the middle, it is not possible to lubricate the joint through the pin. The new solution will allow the arrangement of the lubrication of the pin both from the side of the end with the pin clamp and from the side of the threaded end.

### Disadvantages of the non-disassemblable solution:

1) the welding causes secondary stresses in the heat affected zone;
2) if the pin has been thermally treated, then the welding of the pin clamp will damage the thermally treated pin surface and weakens the pin locally;
3) during the disassembly, it is not possible to hit the pin through the opening/joint without cutting the pin clamp off from the pin (afterwards, the pin will become useless). There are situations when hitting/pressing the pin out from the other side is severely hampered, because there is no room.
4) technological problems related to protection of the pin clamp from corrosion. In order to galvanise the pin clamp, the operating part of the pin should be covered, because it is manufactured with very precise tolerances and, for example, the zinc layer will spoil the prescribed fit. Covering the operating part of the pin and the subsequent removal of the cover is an additional process and it will entail expenses.

An example for a fixation arrangement of a pin and a pin clamp is given in US 8,528,870 B2.

### SUMMARY OF INVENTION

The solution according to the invention is based on the use of a locking ring, a pin clamp and a pin collar (pin collar - in the present solution, a locking collar of the locking ring). The locking ring is a standard product; the pin clamp and the pin collar have been specially designed for the present solution.

Thus, the present invention proposes a fixation arrangement of a pin and a pin clamp comprising a pin and a pin clamp fixed to head of the pin, where at least on one head of the pin at least one pair of pin teeth is formed, which are symmetric to the longitudinal axis of the pin and which in the working condition engage recesses in the pin clamp.

The pin clamp is a basically flat elongated part in the one end of which there is an opening in the pin clamp to fix the pin to the equipment. On the other head of the pin clamp, there is at least one pair of passing-through sockets for the engagement with corresponding pin teeth.

For fixing the pin clamp on the pin, a groove has been made for the locking ring in the cylindrical external surface of the pin in such a way that this groove is located in the external surface of the pin teeth.

In the working condition, the locking ring located in the groove on the external surface of the pin is at least in some part of the depth of the locking ring enveloped by a pin collar along the longitudinal axis of the pin. For the locking ring, there is a circular recess in the pin collar directed towards the pin in the side surface facing the end surface of this pin. In the working condition, the other side surface of the pin collar is supported on the pin clamp - the pin collar is by the pin clamp at least partly pressed with the recess in the pin clamp onto the locking ring.

Preferably, the thickness of the circular recess in the pin collar of the locking ring along the longitudinal axis of the pin is at least one half of the thickness of the locking ring along the longitudinal axis of the pin.

Preferably, the thickness of the notch or notches on the head of the pin along the pin axis is at least such that in the assembled condition when the locking ring is pressed in the working condition into the circular recess in the pin collar, the distance between the bottom of the notch and the side surface of the pin clamp facing the bottom of the notch along the longitudinal axis of the pin is at least equal to or larger than the depth of the circular recess in the pin collar designed for the locking ring.

The purpose is that the pin collar together with the pin clamp lying under the pin collar could be pressed apart from the locking pin to enable the removal of the locking ring from the head of the pin and inserting it into the groove.

In the most preferred embodiment of the invention two pairs of the pin teeth have been formed on the head of the pin lying opposite to each other and symmetrically to the longitudinal axis of the pin with two notches. In the working condition, the pairs of pin teeth are engaged with the corresponding sockets in the pin clamp. The notches are preferably perpendicular to each other.

Preferably, there is at least one pair of passing-through sockets for engagement with the pin teeth; the sockets are formed as separate sockets lying on an imaginary circle. Preferably, the number of sockets in the pin clamp corresponds to the number of the pin teeth on the head of the pin. Typically, the number of sockets is from 2 to 4.

In another embodiment of the pin clamp, there is at least one pair of passing-through sockets for the engagement with the pin teeth; the sockets are formed as sockets lying on an imaginary circle and, in the part facing the centre of the said imaginary circle, the sockets are connected to each other with a cavity formed in the pin clamp. Typically, the number of sockets is from 2 to 4.

In another embodiment of the pin, there is a cylindrical recess in the centre of the pin teeth on the head of the pin that is open toward the head of the pin and symmetric to the longitudinal axis of the pin. This recess is typically used in the case of a pin that has a central lubrication channel, which opens into the said cylindrical recess and where, in longitudinal direction, it opens in the centre of the pin to the external surface of the pin. In the cylindrical recess, there is usually a grease nipple.

In the case of using the other embodiment of the pin clamp, the cavity in the pin clamp in the centre of the sockets allows access to the grease nipple without removing the pin clamp.

The functionality of the solution is ensured by five components. Three of them are specially designed components and two are standard components.

The specially designed components are the pin, the pin clamp and the pin collar.

The standard components are the locking ring and the nut on the other head of the pin.

The locking ring may be both with circular cross-section and with square or rectangular cross-section. The principle of the present solution consists in the interaction between the pin collar (i.e. locking collar of the locking ring) and the locking ring. The pin collar always ensures the fixation of the locking ring and avoids the locking ring getting loose, influenced by some external factor. In the case of this solution, the locking ring is loaded uniformly over its whole surface that allows receiving the maximum load.

### BRIEF DESCRIPTION OF DRAWINGS

Below, the method according to the invention has been described by means of embodiment with references to the attached schematic drawings where:
Fig. 1 shows the invented fixation arrangement for the joint pin and the pin clamp in the local view and in the partial sectional view in the condition where the arrangement is installed in the equipment;
Fig. 2 shows the embodiment of the head of the pin, comprising the pin teeth formed by the notches, and a cylindrical recess on the head of the pin;
Fig. 3 shows the embodiment of the head of the pin, comprising only the pin teeth formed by the notches;
Fig. 4 shows the embodiment of the pin clamp where there are four sockets for the pin teeth and where the sockets are connected to each other by means of a connecting cavity;
Fig. 5 shows the embodiment of the pin clamp where there are four sockets for the pin teeth and where the sockets are separated from each other;
Fig. 6 shows an assembly, comprising the pin according to Fig. 2 and the pin clamp according to Fig. 4;
Fig. 7 shows a longitudinal section along the section line A-A of the pin and pin clamp assembly shown in Fig. 6;

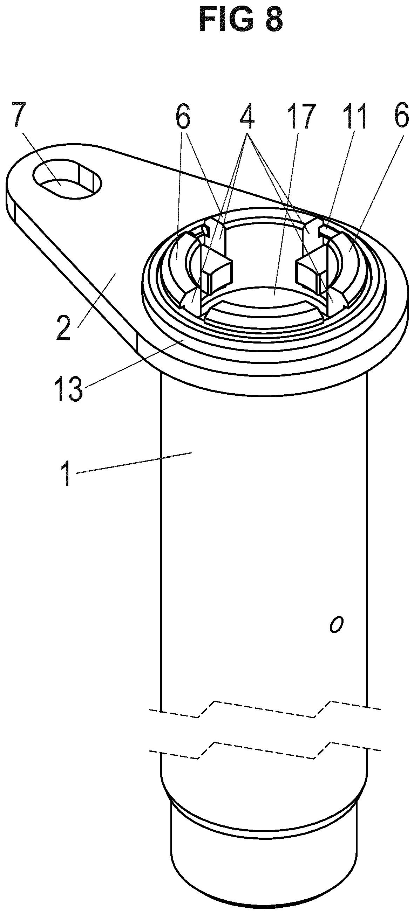

Fig. 8 shows the pin and pin clamp assembly in the embodiment according to Fig. 6 and Fig. 7 in axonometric view;
Fig. 9 shows the assembly according to Fig. 8 in axonometric and in sectional view;
Fig. 10 shows the axonometric and sectional local view of the assembly, comprising the pin according to Fig. 2 and the pin clamp according to Fig. 5;
Fig. 11 shows the assembly, corresponding to Fig. 10, the end view;
Fig. 12 shows the axonometric and sectional local view of the assembly, comprising the pin, corresponding to Fig. 3 and the pin clamp, corresponding to Fig. 4; and
Fig. 13 shows the assembly, corresponding to Fig. 12, the end view.

### EMBODIMENT OF INVENTION

Next, the embodiments according to invention are described with reference to the attached drawings. The same elements and parts in different embodiments are marked with the same reference numbers. Superfluous parts (e.g. grease nipples, etc.) have been omitted from the drawings for clarity.

The given solution can be very successfully used for connecting the column of the timber truck lifter to the main boom. It is also suitable for connecting the main boom and the extension boom of the timber truck lifter or for connecting the boom and the hydraulic cylinder. In both cases, by using this solution, the exterior (gripping) component is stationary, in relation to which the pin does not move. In addition, this solution is suitable for connecting the components in the wide-angle joint where the exclusion of the nut is impossible. It is possible to lubricate both joints through the pin.

There are two ways to assemble the pin and the pin clamp:
1) Pre-assembled
   a) the pin clamp will be placed on the pin teeth with transverse hole on the pin (the pin teeth are engaged in the sockets of the pin clamp);
   b) a pin collar will be placed onto the pin clamp on the head of the pin where the unbevelled side without recess of the locking ring of the pin collar is against the pin clamp;
   c) a locking ring will be inserted into the groove on the external surface of the head of the pin;
   d) the pin is placed into the hinged joint;
   e) on the other head of the pin, the nut will be tightened (not shown in the drawings - only the other head of the pin is shown in the drawings). By this means, the pin is drawn along the axle into the joint so that the pin collar will move together with its recess onto the locking ring.
2) Post-assembled
   a) the pin is placed into the hinged joint,
   b) the pin clamp is placed onto the head of the pin to engage with its sockets with the pin teeth;
   c) a pin collar will be placed onto the pin clamp on the head of the pin where the unbevelled side without recess of the locking ring of the pin collar is against the pin clamp;
   d) a locking ring will be inserted into the groove on the external surface of the head of the pin;
   e) on the other head of the pin, the nut will be tightened (not shown in the drawings - only the other head of the pin is shown in the drawings). By this means, the pin is drawn along the axle into the joint so that the pin collar will move together with its recess onto the locking ring.

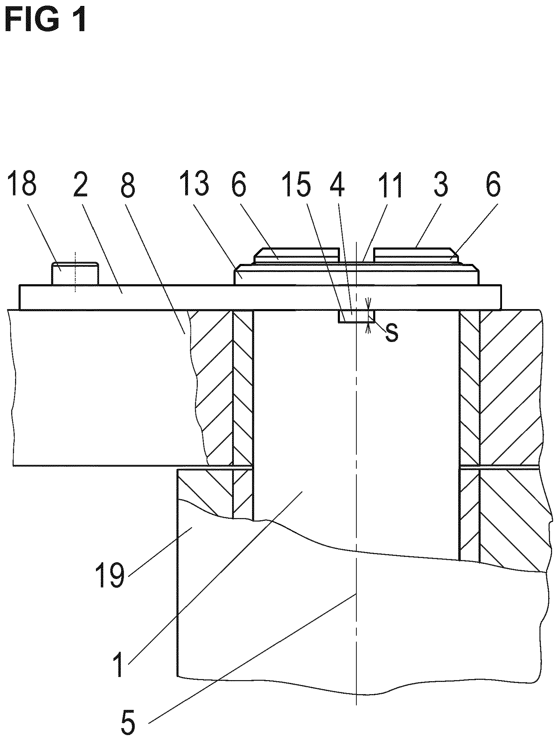

As already mentioned above, the fixation arrangement for the joint pin 1 and the pin clamp 2 according to the invention comprises the pin 1 and the pin clamp fixed to the head of the pin 3, see Fig. 1.

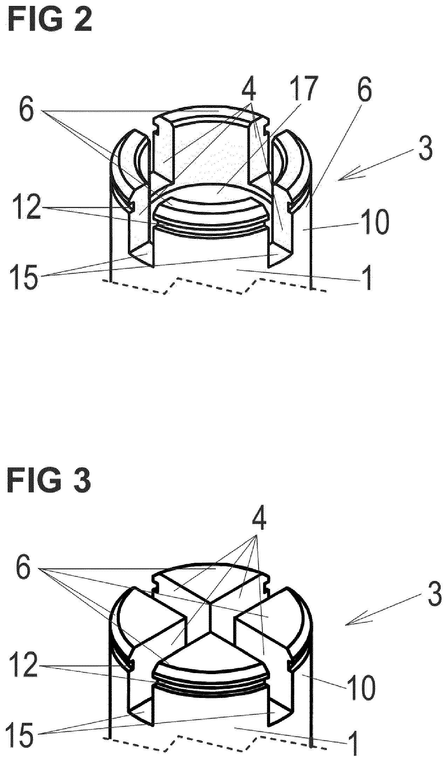

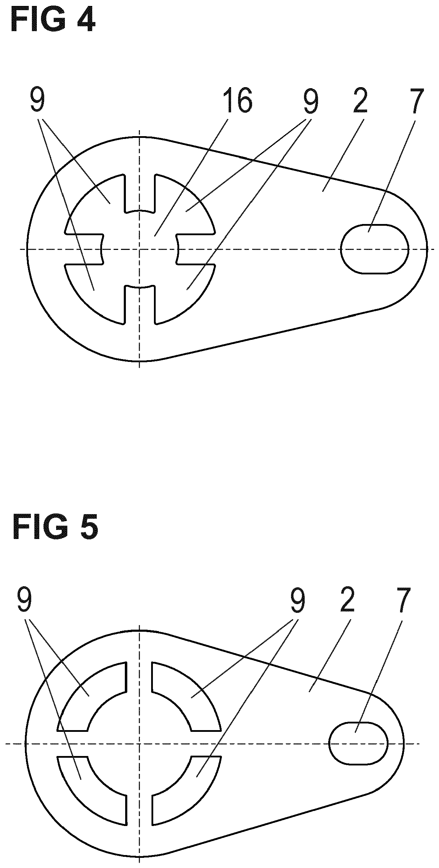

In the embodiments shown in Fig. 2 and Fig. 3, two pairs of pin teeth 6 placed symmetrically opposite each other in relation of the longitudinal axis 5 of the pin 1 having two notches perpendicular to each other and protruding from the head of the pin 1 have been formed in one end 3 of the pin 1 that, in the working condition, must engage with the sockets 6 in the pin clamp, see Fig. 4 and Fig. 5.

As seen in Fig. 4 and Fig. 5, the pin clamp 2 is a basically flat elongated part. On the one end of this part, there is an opening 7 in the pin clamp 2 to fix the part to the equipment 8, for example with a bolt 18. On the other head of the pin clamp 2, there are at least passing-through sockets 9 that, in the working condition, engage with the pin teeth and avoid the turning of the pin 1 in relation to the equipment 8.

On the head 3 of the pin 1, there is a groove 12, made in its external surface 10 for the locking ring 11, see Fig. 2 and Fig. 3. The groove 12 is located on the external surface 10 of the end 3 of the pin 1, at such distance from the end surface of the pin that the groove 12 goes also through the pin teeth 6 in the external surface 10.

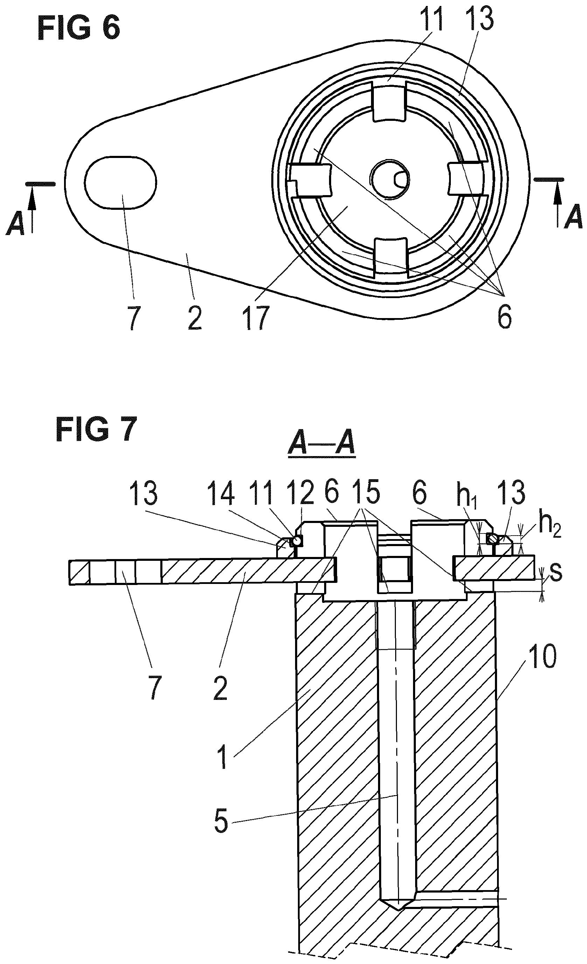

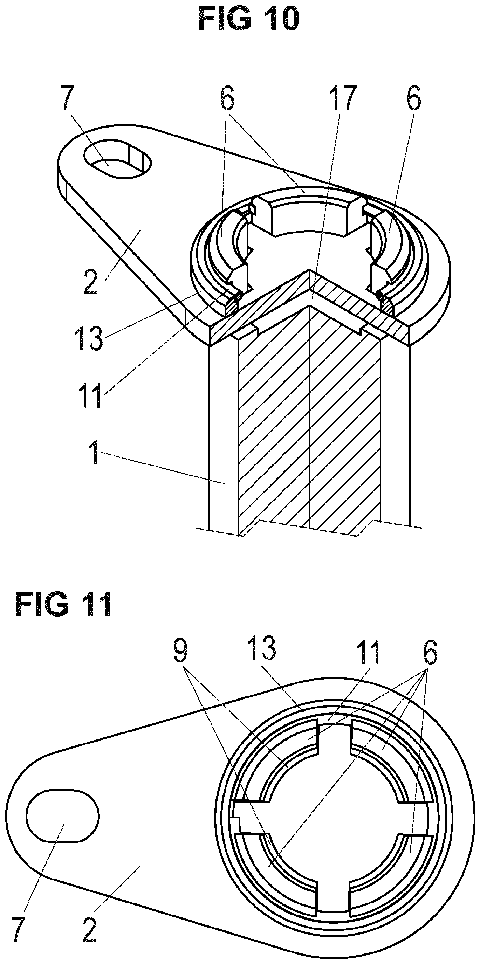

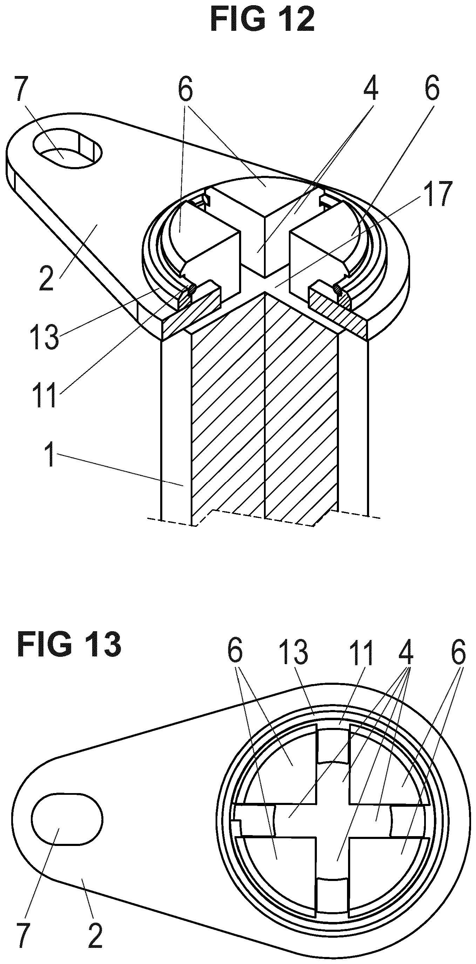

As shown in Fig. 7, Fig. 9, Fig. 10 and Fig. 12, in the working condition, the locking ring 11 located in the groove 12 on the external surface 10 of the pin 1 is at least partly enveloped by the pin clamp 13 along the longitudinal axis 5 of the pin 1 on the thickness h₁ of the locking ring 11 (see Fig. 7).

In the pin clamp 13, there is a circular recess 14 facing the pin 1 in the side surface facing the end surface of the pin 1; the other side surface of the pin collar 13 is in the working condition supported on the pin clamp 2.

In embodiments shown in the drawings, the depth h₂ of the circular recess 14 in the pin collar 13 of the locking ring 11 is in the direction of the longitudinal axis 5 of the pin at least one half of the depth h₁ of the locking ring 11 along the longitudinal axis of the pin 1, see Fig. 7. This is necessary particularly when using a locking ring with round cross-section in order to avoid the possible locking ring getting loose from the groove 12 under the loads affecting the locking ring 11.

Understandably, also the use of locking rings with other cross-sectional shape is possible, such as locking rings with rectangular cross-section.

The profile of the recess 14 in the pin collar 13 should preferably correspond to the profile of the locking ring 11.

The purpose of the pin collar 13 is to balance the forces, which carry over to the locking ring 11 from the pin collar 2 in order to avoid the local impact of forces to the locking ring. This reduces the risk of fatigue cracks arising in the locking ring that could lead to breaking of the locking ring.

In the arrangement according to the invention, the depth of notches 4 on the head 3 of the pin 1 along the longitudinal axis of the pin 1 is such that, in the assembled condition, when the locking ring 11 is pressed in the working condition into the circular recess 14 in the pin collar 13, the distance between the bottom 15 of the notch 4 and the side surface of the pin clamp 2 along the longitudinal axis 5 of the pin 1 is at least equal to or larger than the depth h₂ of the circular recess 14 designed for the locking ring 11 in the pin collar 13, see Fig. 1 and Fig. 7.

Only such an arrangement ensures that the pin 1 released from the other end can be shifted along the longitudinal axis 5 so that the pin collar 13 together with the pin clamp 2 can be pressed against the bottom 15 of the notch or notches 4 so that the pin collar 13 with its recess 14 will move away from the locking ring 11, and only then the locking ring 11 can be removed from the groove 12 or inserted into the groove 12.

As shown in both embodiments in Fig. 4 and Fig. 5, two pairs of pin teeth 6 symmetrically opposite in relation to the longitudinal axis of the pin 1 with two recesses have been formed on the head 3 of the pin 1. The pin teeth 6 will engage with the corresponding sockets 9 in the pin clamp 2.

In Fig. 4 two embodiments of the pin clamp 2 are shown where there are two pairs of passing-through sockets 9 in the pin clamp 2 that have been formed as sockets 9 on an imaginary circle, but that are, in the part directed toward the centre of the said imaginary circle, connected to each other by means of cavities formed in the pin clamp 2.

In Fig. 5, an embodiment of the pin clamp 2 is shown where in the pin clamp 2 there are two pairs of passing-through sockets that have been formed as separate (discrete) sockets 9 lying on an imaginary circle.

In the embodiment shown in Fig. 2, there is a cylindrical cavity 17 that is open towards the end 3 of the pin 1, more specifically between the pin teeth 6 open to the head of the pin 1, and symmetric to the longitudinal axis 5 of the pin 1.

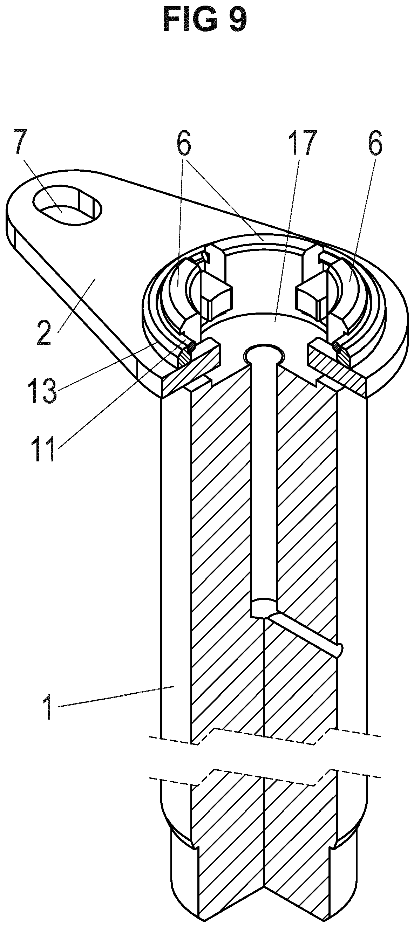

As shown in Fig. 7 and Fig. 9, a lubrication channel opens in the bottom of this cavity 17. Typically, there is a grease nipple at the end of the lubrication channel (not shown). Using the embodiment of the pin 1 shown in Fig. 2 in combination with the pin clamp shown in Fig. 4, it is possible to access the lubrication nipple without removing the pin clamp.

In the embodiment shown in Fig. 1, the fixation arrangement of the joint pin 1 and the pin clamp 2 is shown in partial sectional view and in local view when installed to the equipment 8 (e.g. timber truck lifting boom) and into the joint between the connection eye 19 of the hydraulic cylinder.

As shown in Fig. 1, the pin clamp 2 fixed to the pin 1 end is fixed with a bolt 18 to the equipment 8, i.e. the pin 1 cannot turn in relation to the equipment 8. If for example the connection eye 19 of the hydraulic cylinder is supported on the joint pin 1, the connection eye can, however, turn on the pin 1.

It is obvious for the person skilled in the art that the invention is not limited to the embodiments described above but within the scope of the attached claims also other embodiments are possible.

### LIST OF REFERENCE NUMBERS

- 1: pin
- 2: pin clamp
- 3: head of the pin
- 4: notch
- 5: longitudinal axis of the pin
- 6: pin tooth
- 7: opening
- 8: equipment
- 9: socket in the pin clamp
- 10: external surface of the pin
- 11: locking ring
- 12: groove for the locking ring
- 13: pin collar
- 14: recess
- 15: notch bottom
- 16: cavity
- 17: cylindrical recess (in the pin)
- 18: bolt
- 19: connection eye of the hydraulic cylinder
- h₁: thickness of the locking ring along the longitudinal axis of the pin
- h₂: depth of the recess 14 along the longitudinal axis of the pin
- s: distance in working condition between the notch bottom 4/notches' bottom 15 and the side surface of the pin clamp 2 facing the notch.

## Claims

1. A fixation arrangement of a joint pin (1) and a pin clamp (2) comprising a pin (1) and a pin clamp (2) fastened to the end (3) of the pin,
where at least to the one end (3) of the pin (1), at least one pair of pin teeth (6) is formed with at least one notch (4) opposite to each other, which are symmetric to the longitudinal axis (5) of the pin (1) and protruding from the head of the pin (1) and which in the working condition engage with the pin clamp (2),
where the pin clamp (2) is a substantially flat elongated part in one end of which there is an opening (7) in the pin clamp (2) to fix the pin clamp to the equipment (8), and in the other end of which is at least one pair of passing-through sockets (9) to engage with the pin teeth (6),
***characterized in that,***
for fixing the pin clamp (2) to the pin (1), a groove (12) is formed to the head (3) of the pin (1) onto the cylindrical outer surface (10) of the pin (1) for receiving the locking ring (11) where the said groove (12) is situated in the outer surface (10) of the pin teeth (6),
where in the working condition in the groove (12) in outer surface (10) of the pin (1) a locking ring (11) is placed in at least one part of the thickness of the locking ring (11) along the longitudinal axis (5) of the pin (1), which is enveloped with a pin collar (13), which includes a circular recess (14) directed toward the pin (1) and where the other side surface of the pin collar (13) is supported against the pin clamp (12) in the working condition.

2. The fixation arrangement of a pin and a pin clamp according to claim 1, ***characterized in that,*** the depth of the circular recess (14) in the pin collar (13) of the locking ring (11) along the longitudinal axis of the pin (1) is at least one half of the thickness of the locking ring (11) along the longitudinal axis of the pin (1).

3. The fixation arrangement of a pin and a pin clamp according to any previous claim, ***characterized in that,*** the depth of a notch (4) or the notches (4) on the head (3) of the pin (1) along the axis of the pin (1) is at least such that in the assembled condition when the locking ring (11) is in the working condition pressed into a circular recess (14) in the pin collar (13), the distance between the bottom (15) of the notch (4) and the side surface of the pin clamp (2) along the longitudinal axis (5) of the pin (1) is at least equal to or larger than the depth of the circular recess (14) designed for the locking ring (13) in the pin clamp (13).

4. The fixation arrangement of a pin and a pin clamp according to any previous claim, ***characterized in that,*** there are two pairs of pin teeth (6) formed on the head (3) of the pin (1) lying against each other symmetrically in relation to the longitudinal axis of the pin (1) with two notches that in the working condition are engaged with the corresponding sockets (9) in the pin clamp (2).

5. The fixation arrangement of a pin and a pin clamp according to any previous claim, ***characterized in that,*** there is at least one pair of passing-through sockets (9) in the pin clamp (2) to engage with the pin teeth (6) that have been formed as separate sockets (9) lying on an imaginary circle.

6. The fixation arrangement of a pin and a pin clamp according to any claim 1 to 4, ***characterized in that,*** there is at least one pair of passing-through sockets (9) in the pin clamp (2) that have been formed as sockets (9) lying on an imaginary circle that, in the part directed towards the centre of the said imaginary circle, are connected with each other by a cavity (16) formed in the pin clamp (2).

7. The fixation arrangement of a pin and a pin clamp according to any previous claim, ***characterized in that,*** there is a cylindrical recess (17) open towards the head of the pin (1) and symmetric to the longitudinal axis (5) of the pin (1) in the centre of the pin teeth (6) on the head of the pin (1).

## Patentansprüche

1. Befestigungsanordnung eines Gelenkzapfens (1) und einer Stiftklemme (2) umfassend einen Gelenkzapfen (1) und eine Stiftklemme (2), die am Ende (3) des Gelenkzapfens befestigt sind, wo an mindestens einem Ende (3) des Gelenkzapfens (1) ein paar Stiftzähne (6) mit mindestens einer Kerbe (4) einander gegenüber geformt ist, welche symmetrisch zur Längsachse (5) des Gelenkzapfens (1) sind und vom Kopf des Gelenkszapfens (1) überstehen und welche im Funktionszustand in die Stiftklemme (2) greifen, wo die Stiftklemme (2) ein im wesentliches flaches und langes Teil von dem an einem Ende eine Öffnung (7) in der Stiftklemme (2) ist, um die Stiftklemme am Gerät (8) zu befestigen und am anderen Ende, an dem wenigsten ein paar Durchgangsbuchsen (9) befindet, die in den Stiftzahn (6) greifen, ***dadurch gekennzeichnet, dass*** um die Stiftklemme (2) an den Gelenkzapfen (1) zu befestigen, ist eine Kerbe (12) an den Kopf (3) des Gelenkzapfens (1) auf die äußere zylindrische Fläche (10) des Gelenkzapfens (1) geformt um den Sicherheitsring (11) dort aufzunehmen, wo sich die genannte Kerbe (12) auf der Außenfläche (10) der Stiftzähne (6) befindet, wo bei der Funktionsfähigkeit in die Kerbe (12) der äußeren Fläche (10) des Gelenkzapfens (1) ein Sicherheitsring (11) in mindestens einem Teil der Dicke des Sicherheitsrings (11) entlang der Längsachse (5) des Gelenkzapfens (1) angebracht wird, welche mit einem Kragenrand (13) umgeben ist, der eine runde Vertiefung (14) in Richtung des Gelenkzapfens (1) beinhaltet und wo die andere Seitenfläche des Kragenrands (13) im Funktionsmodus auf der Stiftklemme (2) gestützt wird.

2. Befestigungsanordnung eines Gelenkzapfens und einer Stiftklemme gemäß Anspruch 1, ***dadurch gekennzeichnet, dass*** die Tiefe der runden Aussparung (14) im Kragenrand (13) des Sicherheitsrings (11) entlang der Längsachse des Gelenkzapfens (1) mindestens halb so dick wie der Sicherheitsring (11) entlang der Längsachse des Gelenkzapfens (1) ist.

3. Befestigungsanordnung eines Gelenkzapfens und einer Stiftklemme gemäß einem der vorhergehenden Ansprüche, ***dadurch gekennzeichnet, dass*** die Tiefe der Kerbe (4) oder der Kerben (4) auf dem Kopf (3) des Gelenkzapfens (1) entlang der Achse des Gelenkzapfens (1) mindestens so in zusammengebauter Form ist, wenn der Sicherheitsring (11) im Funktionszustand in eine runde Kerbe (14) im Kragenrand (13) gepresst wird, die Distanz zwischen dem unteren Rand (15) der Kerbe (4) und der Seitenfläche der Stiftklemme (2) entlang der Längsachse (5) des Gelenkzapfens (1) mindestens gleich groß oder größer als die Tiefe der runden Aussparung (14) ist, die für den Sicherheitsring (11) im Kragenrand (13) geformt wurde.

4. Befestigungsanordnung eines Gelenkzapfens und einer Stiftklemme gemäß einem der vorhergehenden Ansprüche, ***dadurch gekennzeichnet, dass*** es zwei paare von Stiftzähnen (6) gibt, die auf dem Kopf (3) des Gelenkzapfens (1) geformt sind und sich symmetrisch aneinander in Relation zur Längsachse des Gelenkzapfens (1) mit zwei Kerben befinden, die im Funktionszustand mit den entsprechenden Buchsen (9) in der Stiftklemme (2) verbunden sind.

5. Befestigungsanordnung eines Gelenkzapfens und einer Stiftklemme gemäß einem der vorhergehenden Ansprüche, ***dadurch gekennzeichnet, dass*** es mindestens ein paar Durchlaufbuchsen (9) in der Stiftklemme (2) gibt, um in die Stiftzähne (6) zu greifen, die als separate Buchsen geformt wurden und in einem vorzustellenden Kreis liegen.

6. Befestigungsanordnung eines Gelenkzapfens und einer Stiftklemme gemäß einem der Ansprüche 1 bis 4, ***dadurch gekennzeichnet, dass*** es mindestens ein paar Durchlaufbuchsen (9) in der Stiftklemme (2) gibt, die als Buchsen (9) geformt auf der vorzustellenden Kreis so liegen, dass in dem Teil der zur Mitte des genannten imaginären Kreises liegen und miteinander durch ein Loch (16) in der Stiftklemme (2) verbunden sind.

7. Befestigungsanordnung eines Gelenkzapfens und einer Stiftklemme gemäß einem der vorhergehenden Ansprüche, ***dadurch gekennzeichnet, dass*** eine zylindrische Aussparung (17) in Richtung des Kopfes des Gelenkzapfens (1) offen ist und symmetrische entlang der Längsachse (5) des Gelenkzapfens (1) in der Mitte der Stiftzähne (6) auf dem Kopf des Gelenkzapfens (1) ist.

## Revendications

1. Dispositif de fixation d'une broche d'articulation (1) et d'une pince broche (2) comprenant une broche (1) et une pince broche (2) fixée à l'extrémité (3) de la broche, où au moins une extrémité (3) de la broche (1), au moins une paire de dents de broche (6) est formée avec au moins une encoche (4) opposée l'une à l'autre, qui sont symétriques par rapport à l'axe longitudinal (5) de la broche (1) et dépassent de la tête de la broche (1) et qui, dans la condition de fonctionnement, s'engagent dans la pince broche (2), où la pince broche (2) est une partie allongée substantiellement plate à une extrémité de laquelle se trouve une ouverture (7) dans la pince broche (2) pour fixer la pince broche à l'équipement (8), et à l'autre extrémité de laquelle se trouve au moins une paire de douilles traversantes (9) destinées à s'engager dans les dents de broche (6), ***caractérisé en ce que,*** pour fixer la pince broche (2) à la broche (1), une rainure (12) est formée sur la tête (3) de la broche (1) sur la surface extérieure cylindrique (10) de la broche (1) pour recevoir la bague de blocage (11) où est située ladite rainure (12) dans la surface extérieure (10) des dents de broche (6), où dans la condition de fonctionnement, dans la rainure (12) de la surface extérieure (10) de la broche (1), une bague de blocage (11) est placé dans au moins une partie de l'épaisseur de la bague de blocage (11) le long de l'axe longitudinal (5) de la broche (1), qui est enveloppé d'un collier de broche (13), qui comprend un évidement circulaire (14) dirigé vers la broche (1) et où l'autre surface latérale du collier de broche (13) est supportée contre la pince broche (2) dans la condition de fonctionnement.

2. Dispositif de fixation d'une broche d'articulation et d'une pince broche selon la revendication 1, ***caractérisé en ce que,*** la profondeur de l'évidement circulaire (14) dans la collier de broche (13) de la bague de blocage (11) le long de l'axe longitudinal de la broche (1) représente au moins la moitié de l'épaisseur de la bague de blocage (11) le long de l'axe longitudinal de la broche (1).

3. Dispositif de fixation d'une broche d'articulation et d'une pince broche selon l'une quelconque des revendications précédentes, ***caractérisé en ce que,*** la profondeur d'une encoche (4) ou des encoches (4) sur la tête (3) de la broche (1) le long de l'axe de la broche (1) est au moins telle qu'à l'état assemblé lorsque la bague de blocage (11) est dans la condition de fonctionnement pressé dans un évidement circulaire (14) dans le collier de broche (13), la distance entre le fond (15) de l'encoche (4) et la surface latérale de la pince broche (2) le long de l'axe longitudinal (5) de la broche (1) est au moins égale ou supérieure à la profondeur de l'évidement circulaire (14) conçu pour la bague de blocage (11) dans le collier de broche (13).

4. Dispositif de fixation d'une broche d'articulation et d'une pince broche selon l'une quelconque des revendications précédentes, ***caractérisé en ce que*** deux paires de dents de broche (6) formées sur la tête (3) de la broche (1) sont superposées symétriquement par rapport à l'axe longitudinal de la broche (1) avec deux encoches qui, dans la condition de fonctionnement sont engagées avec les douilles correspondantes (9) dans la pince broche (2).

5. Dispositif de fixation d'une broche d'articulation et d'une pince broche selon l'une quelconque des revendications précédentes, ***caractérisé en ce que,*** il y a au moins une paire de douilles traversantes (9) dans la pince broche (2) pour s'engager dans les dents de broche (6) qui ont été formées en tant que douilles séparées (9) reposant sur un cercle imaginaire.

6. Dispositif de fixation d'une broche d'articulation et d'une pince broche selon l'une des revendications 1 à 4, ***caractérisé en ce que,*** il y a au moins une paire de douilles traversantes (9) dans la pince broche (2) qui ont été formées comme des douilles (9) reposant sur un cercle imaginaire qui, dans la partie dirigée vers le centre dudit cercle imaginaire, sont reliés l'un à l'autre par une cavité (16) formée dans la pince broche (2).

7. Dispositif de fixation d'une broche d'articulation et d'une pince broche selon l'une quelconque des revendications précédentes, ***caractérisé en ce qu***'il y a un évidement cylindrique (17) ouvert vers la tête de la broche (1) et symétrique à l'axe longitudinal (5) de la broche (1) au centre des dents de broche (6) sur la tête de la broche (1).
